# EUROPEAN PATENT APPLICATION

(11) **EP 2 405 562 A1**
(43) Date of publication of application: **11.01.2012**
(21) Application number: 11172428.2
(22) Date of filing: 01.07.2011
(51) Int. Cl.: H02M 1/42

(54) **Bridgeless power factor correction boost-doubler circuit**

(30) Priority: 08.07.2010 JP 2010156111
(71) Applicant: Fujitsu Limited, Kawasaki-shi, Kanagawa 211-8588 (JP)
(72) Inventor: Yonezawa, Yu, Kanagawa 211-8588 (JP); Nakashima, Yoshiyasu, Kanagawa 211-8588 (JP)
(74) Representative: Stebbing, Timothy Charles

(57) **Abstract**

A circuit (1) include: a first power factor correction circuit (2) that forces current produced by the positive AC voltage to be in phase with the positive AC voltage so that a power factor of electric power is improved; a second power factor correction circuit (3) that forces current produced by the negative AC voltage to be in phase with the negative AC voltage so that a power factor of electric power is improved; and an output circuit (4) including a first capacitor (C1) storing first electric power with a power factor improved by the first power factor correction circuit and a second capacitor (C2) storing second electric power with a power factor improved by the second power factor correction circuit, the first capacitor (C1) and the second capacitor (C2) being provided in series, the output circuit (4) outputting the first electric power stored in the first capacitor (C1) and the second electric power stored in the second capacitor (C2).

## Description

The present invention relates to a voltage-dividing power factor correction circuit, a voltage-dividing power factor correction apparatus, and a voltage-dividing power factor correction method.

Power Supply Units (PSUs) designed to convert an input alternating current (AC) voltage to a direct current (DC) voltage are used for supplying power to computers such as servers and personal computers. Such a PSU may cause noise and distribution loss because rectifiers and smoothing capacitors provided in the PSU distort the waveform of an input current. Therefore, a Power Factor Correction (PFC) circuit, which improves the power factor of input electric power (electrical current) to prevent noise and reduce distribution loss, is incorporated in PSUs to confirm to the IEC 1000_3_4 standard.

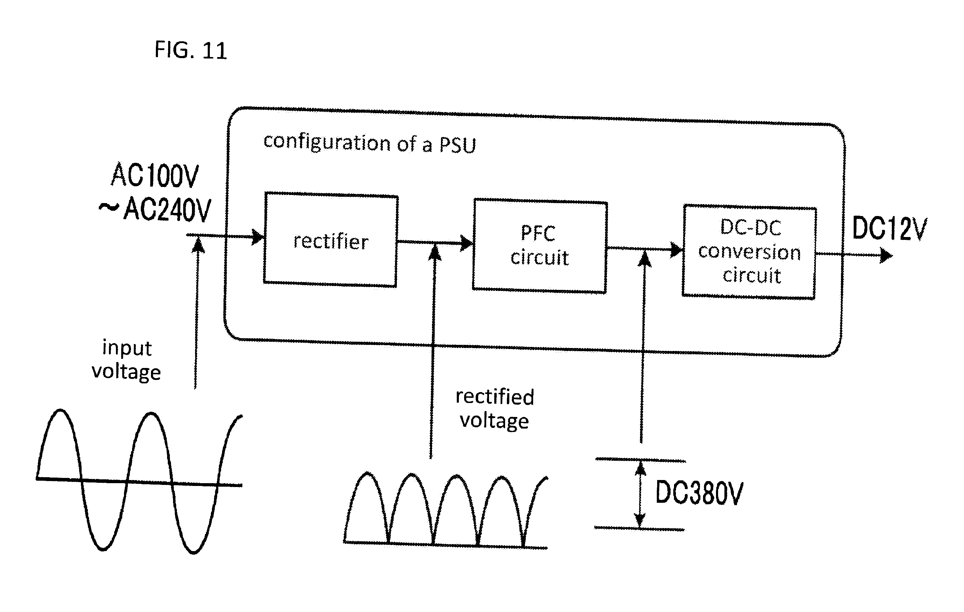

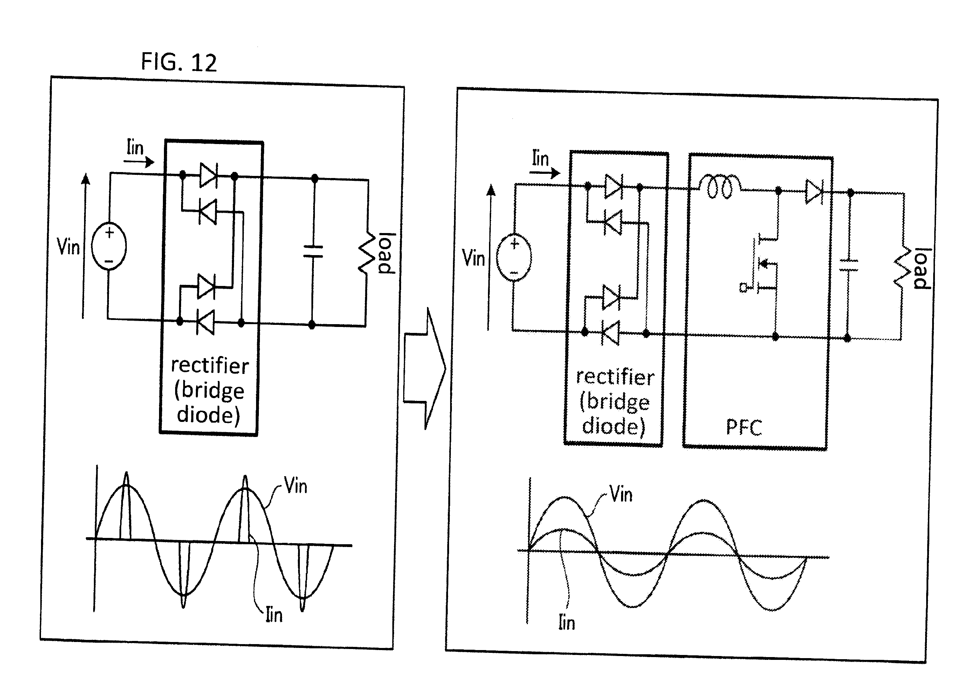

Referring to FIGS. 11 and 12, an example of PSU will be described. FIG II illustrates a configuration of a PSU. FIG. 12 illustrates a PFC circuit. An input AC voltage in the range of 110 V to 240 V, for example, is applied to the PSU illustrated in FIG. 11. A rectifier in the PSU rectifies the applied AC voltage. The rectified voltage is applied to the PFC circuit. A DC-DC conversion circuit in the PSU converts the DC voltage of 380 V (volts) with a power factor improved by the PFC circuit to a DC voltage of 12 V, which is then supplied to a computer such as a server or a personal computer.
In the PSU illustrated in the left-hand part of FIG. 12, a distorted current Iin flows because no PFC circuit is provided. In contrast, in the PSU illustrated in the right-hand part of FIG. 12, a PFC circuit brings the waveform of the current Iin into phase with the waveform of an input voltage Vin to reduce distortion of the current Iin, thereby reducing noise and distribution loss.

The PFC circuit brings the waveform of an input current closer to a sinusoidal waveform to reduce distortion of the current to improve the power factor of the input electric power. Specifically, when a voltage rectified by the rectifier is applied, the PFC circuit uses high-frequency switching and pulse width modulation to form a current waveform that is closer to the waveform of the input voltage.

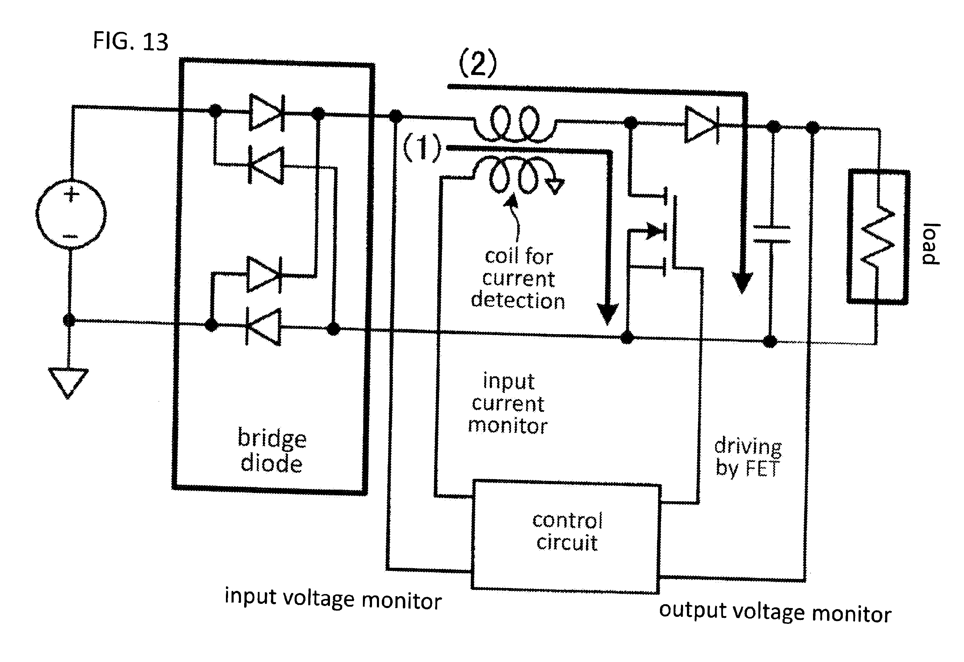

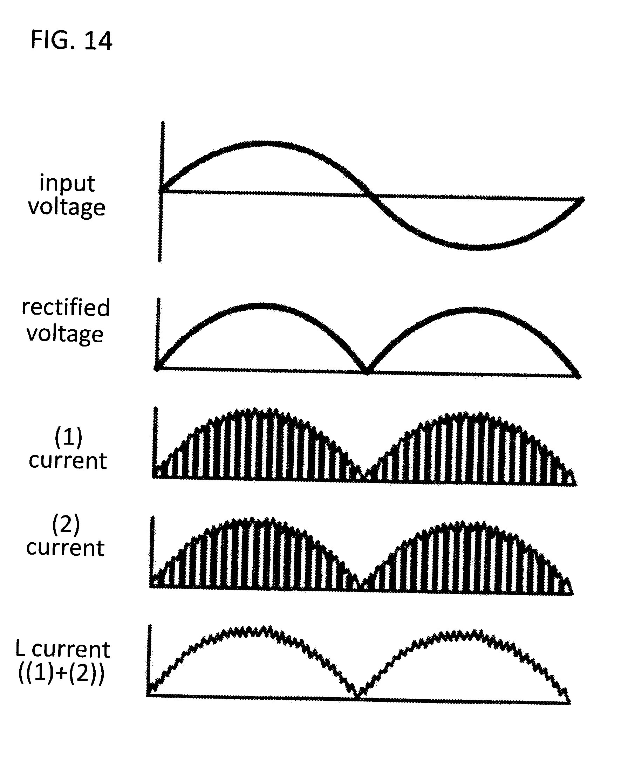

Referring to FIGS. 13 and 14, how a PFC circuit improves a power factor will be described. FIG. 13 3 illustrates a method for improving a power factor. FIG. 14 illustrates the effect of the PFC circuit. The PFC circuit in the example in FIG. 13 includes a control circuit that drives a field effect transistor (FET) according to an input voltage and an input current.

When a voltage rectified by a bridge diode, which functions as a rectifier, is applied to the PFC circuit, the PFC circuit intermittently turns on the FET to allow current to flow alternately through a path (1) in FIG. 13 and a path (2) in FIG. 13. As illustrated in FIG. 14, the PFC circuit then adds the intermittent current flowing through the path (I) and the intermittent current flowing through the path (2) together to bring the waveform of the input current closer to the waveform of the rectified voltage.

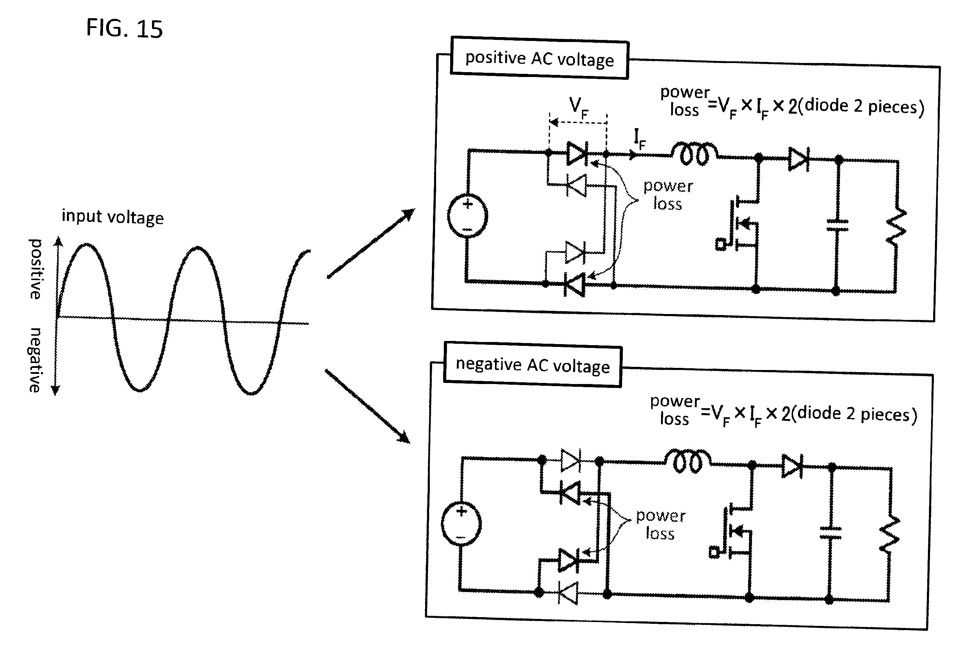

Here, power loss is caused in the PSU by the bridge diode functioning as the rectifier. For example, a PSU in an example illustrated in FIG. 15 uses a bridge diode to allow current to flow through the PFC circuit in a constant direction. Specifically, the PSU inevitably includes two diodes in a path through which current flows, which cause power loss. FIG 15 is a diagram for explaining power loss in the bridge diode.

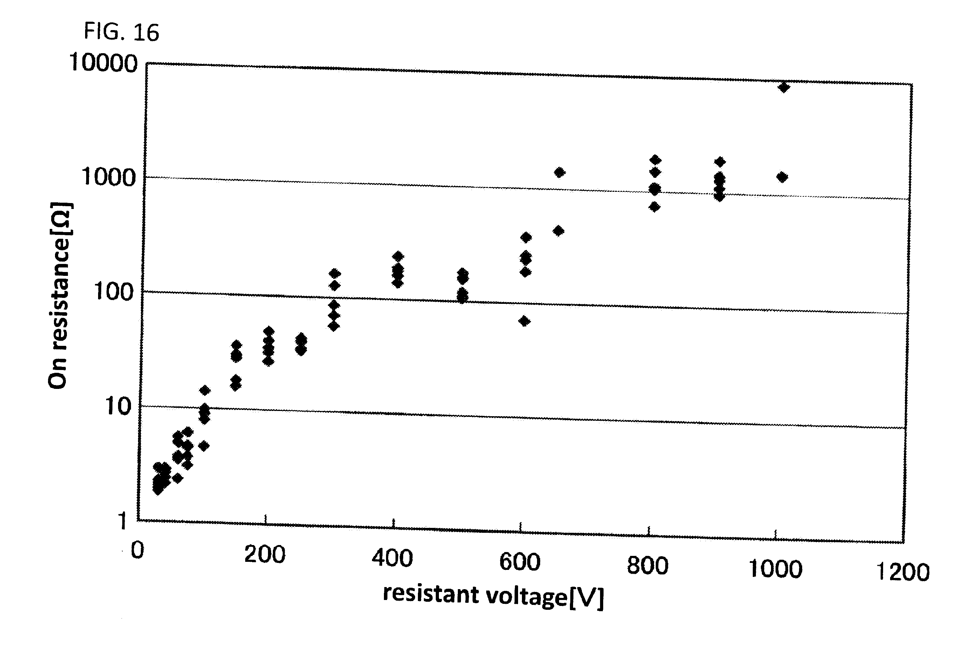

High-voltage capacitors and FETs are provided in a PFC circuit because an input voltage increases in the course of correction of the power factor. FIG. 16 illustrates resistances of FETs. As illustrated in FIG. 16, high-voltage FETs have larger current resistances than low-voltage FETs. In addition, high-voltage capacitors and FETs are larger in size than low-voltage capacitors and FETs. Accordingly, a PSU incorporating a PFC circuit has a higher equivalent resistance and a larger footprint than a PSU without a PFC circuit.

A power factor correction technique using synchronous rectification is known in which a bridge diode is replaced with multiple FETs and a control integrated circuit (IC) in order to avoid the power loss in diodes described above (US Patent No. 7164591, National Publication of International Patent Application WO 2007-527687). For example, a PSU using synchronous rectification in an example illustrated in FIG. 17 7 uses four FETs and a control integrated circuit (IC) to replace a bridge diode in order to reduce power loss.

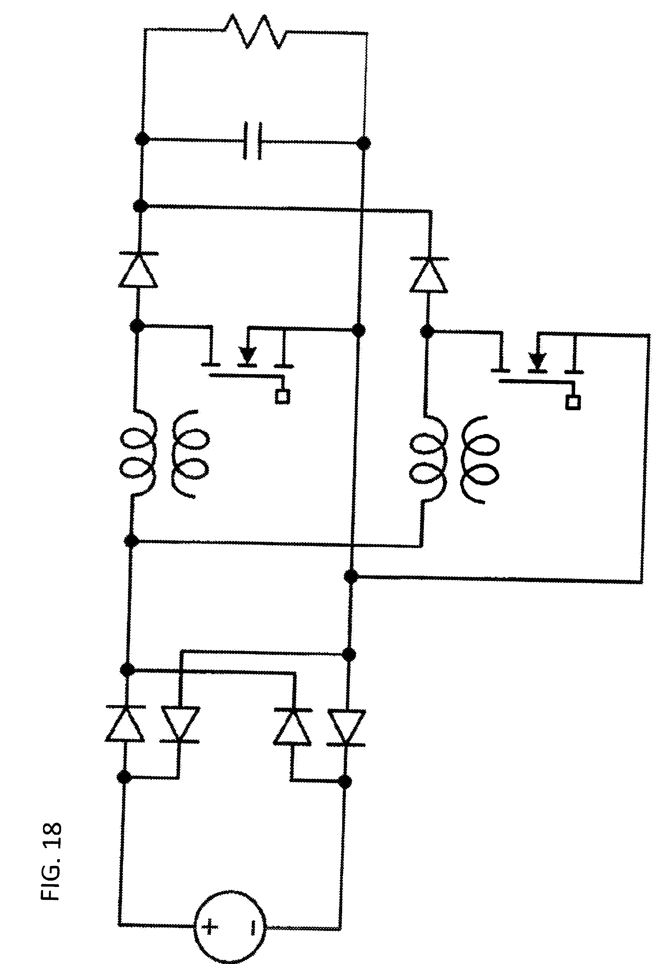

An interleaved power factor correction technique is known in which PFC circuits are provided in parallel in order to reduce equivalent series resistance (ESR) caused by the PFC circuits. For example, a PSU using interleaved circuitry in an example illustrated in FIG. 18 includes a bridge diode functioning as a rectifier and two PFC circuits provided in parallel. Such a PSU applies a voltage rectified by the bridge diode to the two parallel PFC circuits at the same time to reduce ESR in the PFC circuits to half. The PSU also reduces ripple current by controlling the parallel PFC circuits so as to operate 180 degrees out of phase with each other.

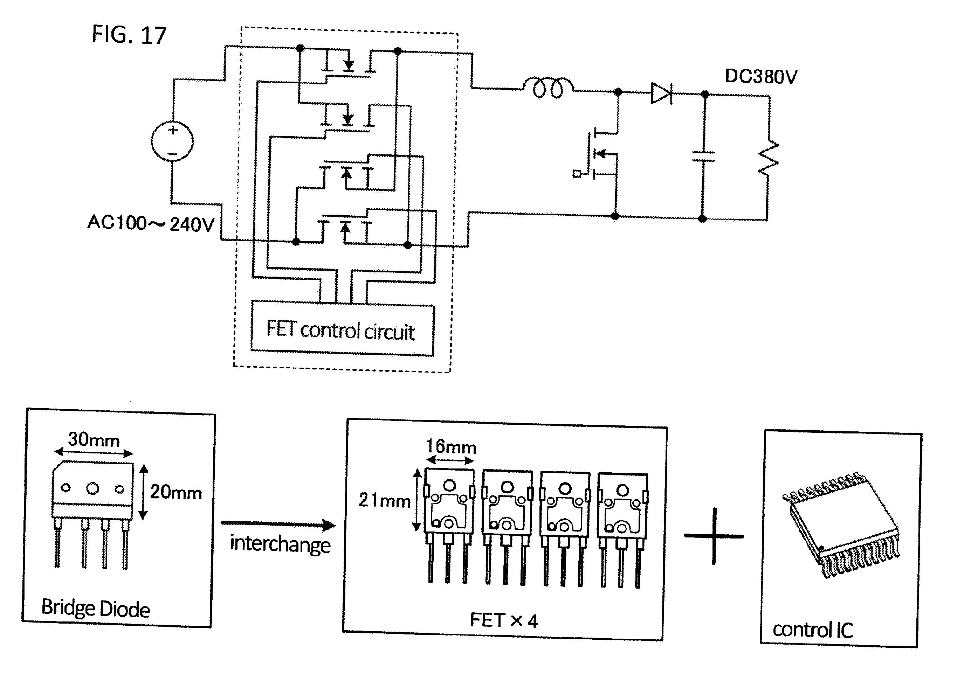

However, the power factor correction technique using synchronous rectification described above has the problem of increase in the footprint of the PSU resulting from the increase in the footprint of the rectifier because the diodes of the bridge diode are replaced with FETs and a control IC for controlling the FETs is added. For example, in the example illustrated in FIG. 17, one bridge diode is replaced with four FETs and a control IC for controlling the FETs is added, resulting in an increased footprint of the rectifier.

With the interleaved power factor correction technique described above, an input voltage applied to each PFC circuit increases. Therefore high-voltage capacitors and high-voltage FETs are provided in each PFC circuit. As a result, the footprints of the PFC circuits, and therefore the foot print of the PSU, increase. Another problem with the technique is that since a bridge diode, which functions as a rectifier, is provided in the PSU, power loss occurs in each diode of the bridge diode.

In one aspect of the present invention, the present invention reduces the footprint of a PSU or reduces power loss in a PSU.

According to one aspect of the embodiments, there is provided a voltage-dividing power factor correction circuit includes a first power factor correction circuit that, when a positive AC voltage is applied from an external source, forces current produced by the applied positive AC voltage to be in phase with the applied positive AC voltage so that a power factor of electric power is improved; a second power factor correction circuit that, when a negative AC voltage is applied from an external source, forces current produced by the applied negative AC voltage to be in phase with the applied negative AC voltage so that a power factor of electric power is improved; and an output circuit including a first capacitor storing first electric power with a power factor improved by the first power factor correction circuit and a second capacitor storing second electric power with a power factor improved by the second power factor correction circuit, the first capacitor and the second capacitor being provided in series, the output circuit outputting the first electric power stored in the first capacitor and the second electric power stored in the second capacitor.
Reference is made, by way of example only, to the accompanying drawings in which:

FIG. 1 is a diagram illustrating a voltage-dividing bridgeless PFC circuit according to a first embodiment;
FIG 2 is a diagram illustrating a control circuit;
FIG 3 is a diagram illustrating exemplary timings at which the control circuit controls FETs;
FIG. 4 is a diagram illustrating an exemplary process performed by a voltage-dividing bridgeless PFC circuit to improve a power factor;
FIG 5 is a diagram illustrating voltage and current values in a voltage-dividing bridgeless PFC circuit;
FIG. 6 is a diagram illustrating an exemplary voltage-dividing bridgeless PFC circuit;
FIG. 7 is a diagram illustrating an effect of the voltage-dividing bridgeless PFC circuit;
FIG. 8 is a diagram illustrating reduction of the number of boost inductors and current transformers;
FIG. 9 is a diagram illustrating circuits that share a PWM control circuit;
FIG 10 is a diagram illustrating an exemplary voltage-dividing bridgeless PFC circuit in which the number of diodes are further reduced;
FIG. 11 is a diagram illustrating a configuration of a PSU;
FIG. 12 is a diagram illustrating a PFC circuit;
FIG. 13 is a diagram illustrating a method for improving a power factor;
FIG. 14 is a diagram illustrating an effect of the PFC circuit;
FIG. 15 is a diagram illustrating power loss in a bridge diode;
FIG. 16 is a diagram illustrating the resistances of FETs;
FIG. 17 is a diagram illustrating a technique that replaces a bridge diode with FETs; and
FIG. 18 is a diagram illustrating a technique that uses interleaving.

A voltage-dividing power factor correction circuit of the present application will be described with reference to the accompanying drawings.

### First Embodiment

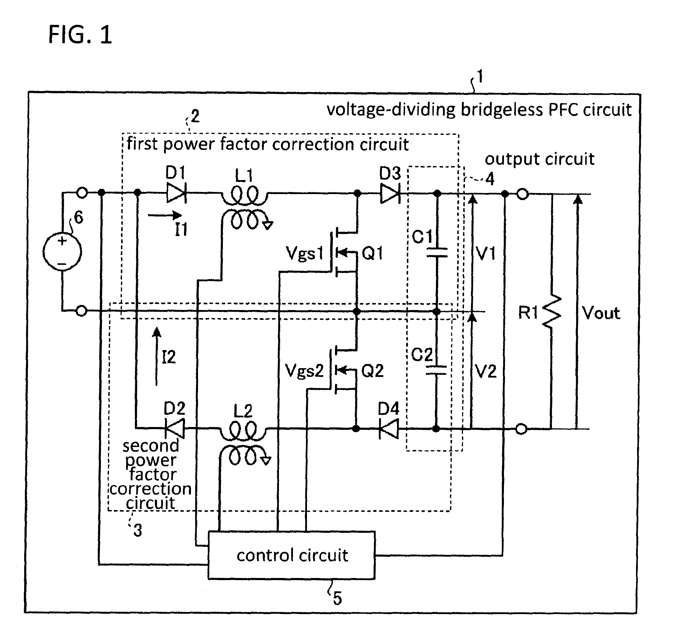

An example of voltage-dividing power factor correction (PFC) circuit of a first embodiment will be described with reference to FIG 1. FIG 1 illustrates a voltage-dividing bridgeless PFC circuit according to the first embodiment. The voltage-dividing bridgeless PFC circuit includes at least two power factor correction circuits provided in parallel.

As illustrated in FIG 1, the voltage-dividing bridgeless PFC circuit 1 includes a first power factor correction circuit 2, a second power factor correction circuit 3, an output circuit 4, and a control circuit 5 and is connected to an external power source 6 and an external resistance R1. The external power source 6 is an AC power source which applies an AC voltage to the voltage-dividing bridgeless PFC circuit 1 .

When a positive AC voltage is applied from the external power source 6, the first power factor correction circuit 2 forces current produced by the applied positive AC voltage to be in phase with the applied positive AC voltage to improve the power factor of electric power. When a positive AC voltage is applied from the external power source 6, the first power factor correction circuit 2 uses a FET Q1 to force the current produced by the applied positive AC voltage to be in phase with the applied positive AC voltage to improve the power factor of electric power.

That is, the first power factor correction circuit 2 allows current I1 to flow through itself only when a positive AC voltage is applied from the external power source 6. Accordingly, the first power factor correction circuit 2 forces the current 11 to be in phase with the applied positive AC voltage to improve the power factor of electric power only when the positive AC voltage is applied from the external power source 6. The first power factor correction circuit 2 then stores the electric power with the improve power factor in a capacitor C 1.

The first power factor correction circuit 2 is connected to the external power source 6 in parallel with the second power factor correction circuit 3, which will be described later. Therefore and because current flows through the first power factor correction circuit 2 only when a positive voltage is applied from the external power source 6, half the AC voltage applied from the external power source 6 is applied to the first power factor correction circuit 2. This means that the first power factor correction circuit 2 may use low-voltage components which are smaller than high-voltage components and therefore may have a smaller footprint than a power factor correction circuit that uses high-voltage components.

When a negative AC voltage is applied from the external power source 6, the second power factor correction circuit 3 forces current produced by the applied negative AC voltage to be in phase with the applied negative AC voltage to improve the power factor of electric power. When a negative AC voltage is applied from the external power source 6, the second power factor correction circuit 3 uses a FET Q2 to force current produced by the applied negative AC voltage to be in phase with the applied negative AC voltage to improve the power factor of the electric power.

That is, the second power factor correction circuit 3 allows current 12 to flow through itself only when a negative AC voltage is applied from the external power source 6. Accordingly, the second power factor correction circuit 3 forces the current 12 to be in phase with the applied negative AC voltage to improve the power factor of electric power only when the negative AC voltage is applied from the external power source 6. The second power factor correction circuit 3 then stores the electric power with the improve power factor in a capacitor C2.

The second power factor correction circuit 3 is connected to the external power source 6 in parallel with the first power factor correction circuit 2. Therefore and because current flows through the second power factor correction circuit 3 only when a negative voltage is applied from the external power source 6, half the applied voltage from the external power source 6 is applied to the components of the second power factor correction circuit 3. This means that the second power factor correction circuit 3 may use components having half the withstand voltage of conventional ones. Consequently, the footprint of the power factor correction circuit may be reduced compared with a conventional power factor correction circuit.

The output circuit 4 has the capacitors C1 and C2 connected in series. The capacitor C 1 stores electric power with a power factor improved by the first power factor correction circuit 2, whereas the capacitor C2 stores electric power with a power factor improved by the second power factor correction circuit 3. The output circuit 4 outputs the electric power stored in the capacitors C 1 and C2 connected in series to the external resistance R1.

The control circuit 5 detects whether an AC voltage applied from the external power source 6 is positive or negative. When the control circuit 5 detects a positive AC voltage applied from the external power source 6, the control circuit 5 applies a gate voltage to the FET Q1 of the first power factor correction circuit 2; when the control circuit 5 detects a negative AC voltage applied from the external power source 6, the control circuit 5 applies a gate voltage to the FET Q2 of the second power factor correction circuit 3.

That is, when a positive voltage is applied from the external power source 6, the control circuit 5 intermittently turns on the FET Q 1 of the first power factor correction circuit to cause the first power factor correction circuit 2 to improve the power factor of electric power; when a negative voltage is applied from the external power source 6, the control circuit 5 intermittently turns on the FET Q2 of the second power factor correction circuit 3 to cause the second power factor correction circuit 3 to improve the power factor of electric power.

As described above, the voltage-dividing bridgeless PFC circuit 1 includes the first power factor correction circuit 2 that, when a positive AC voltage is applied, forces current produced by the applied positive voltage to be in phase with the applied positive voltage to improve the power factor of electric power. The voltage-dividing bridgeless PFC circuit 1 also includes the second power factor correction circuit 3 that is provided in parallel with the first power factor correction circuit 2 and, when a negative AC voltage is applied, forces current produced by the applied negative voltage to be in phase with the applied negative voltage to improve the power factor of electric power.

That is, the voltage-dividing bridgeless PFC circuit 1 includes a circuit including the first power factor correction circuit 2 that improves the power factor only when a positive AC voltage is applied from the external power source 6 and the second power factor correction circuit 3 that is connected in parallel with the first power factor correction circuit 2 and that improves the power factor only when a negative AC voltage is applied from the external power source 6. Therefore, the voltage-dividing bridgeless PFC circuit 1 may improve the power factor of supplied AC power without using a bridge diode.

A conventional PSU used a bridge diode, for example, to allow the current to flow through a PFC circuit in a constant direction. Therefore, there were three diodes in a current path in the example illustrated in FIG 15. On the other hand, the voltage-dividing bridgeless PFC circuit 1 in the example illustrated in FIG 1 includes the first power factor correction circuit 2 through which current flows when a positive voltage is applied from the external power source 6 and the second power factor correction circuit 3 through which current flows when a negative voltage is applied from the external power source 6.

Accordingly, the voltage-dividing bridgeless PFC circuit 1 does not need a bridge diode for maintaining the direction of current flowing through the PFC circuit constant and therefore may reduce the number of diodes in a current path to two. That is, the voltage-dividing bridgeless PFC circuit 1 may reduce power loss caused by a bridge diode.

Only a positive AC voltage is applied to the first power factor correction circuit 2 whereas only a negative AC voltage is applied to the second power factor correction circuit 3. That is, only half the AC voltage supplied from the external power source 6 is applied to each of the power factor correction circuits 2 and 3. Accordingly, each of the power factor correction circuits 2 and 3 may reduce a boosted voltage to half compared with a conventional PFC circuit and therefore may use low-voltage components. Consequently, since the voltage-dividing bridgeless PFC circuit 1 may use small, low-voltage components, the footprint of the voltage-dividing bridgeless PFC circuit 1, and therefore the footprint of the PSU, may be reduced.

Since the voltage-dividing bridgeless PFC circuit 1 includes the output circuit 4 including capacitors C 1 and C2 provided in series, the voltage-dividing bridgeless PFC circuit 1 may add voltages output from the power factor correction circuits 2 and 3 together. That is, the voltage-dividing bridgeless PFC circuit 1 reduces a boosted voltage in each of the power factor correction circuit 2 and 3 to half compared with a conventional PFC circuit and yet may maintain an output voltage equivalent to that of the conventional PFC circuit.

Components of the voltage-dividing bridgeless PFC circuit 1 will be described below. The first power factor correction circuit 2 includes a diode D1, an inductor (coil) L1, a field effect transistor (FET) Q1, a diode D3, and a capacitor C1. The first power factor correction circuit 2 has a closed circuit through which current flows from the external power source 6 to the diode D1 to the inductor L1 and to the FET Q1 when a positive AC voltage is applied from the external power source 6. The first power factor correction circuit 2 has a closed circuit through which current flows from the external power source 6 to the diode D1 to the inductor L1 to the diode D3 to the capacitor C1 when a positive AC voltage is applied from the external power source 6.

The FET Q1 is a field effect transistor that forces current to flow from the inductor L1 toward the external power source 6 when a gate voltage Vgs1 is applied from the control circuit 5, which will be described later, to the FET Q1. The FET Q1 does not allow current to flow from the inductor L 1 toward the external power source 6 when the gate voltage Vgs 1 is not applied.

The diode D1 is a diode that allows current to flow from the external power source 6 toward the inductor L1. The inductor L1 is a passive element designed to have a specific amount of inductance. The diode D3 is a diode that allows current to flow from the inductor L1 toward the capacitor C1. The capacitor C 1 is a capacitor that stores electric power having an improved power factor.

The second power factor correction circuit 3 includes a diode D2, an inductor L2, a FET Q2, a diode D4 and a capacitor C2. The second power factor correction circuit 3 has a closed circuit through which current flows from the FET Q2 to the inductor L2 to the diode D2 when a negative AC voltage is applied from the external power source 6. The second power factor correction circuit 3 has a closed circuit through which current flows from the external power source 6 to the capacitor C2 to the diode D4 to the inductor L2 to the diode D2 when a negative AC voltage is applied from the external power source 6.

The FET Q2 is a field effect transistor that allows current to flow from the external power source 6 toward the inductor L2 when a gate voltage Vgs2 is applied from the control circuit 5, which will be described later, to the FET Q2. The FET Q2 does not allow current to flow from the external power source 6 toward the inductor L2 when the gate voltage Vgs2 is not applied.

The diode D2 is a diode that allows current to flow from the inductor L2 toward the external power source 6. The inductor L2 is an inductor similar to the inductor L1. The diode D4 is a diode that allows current to flow from the capacitor C2 toward the inductor L2. The capacitor C2 is a capacitor that stores electric power having an improved power factor. The capacitor C2 is connected to the external resistance R1 in series with the capacitor C 1.

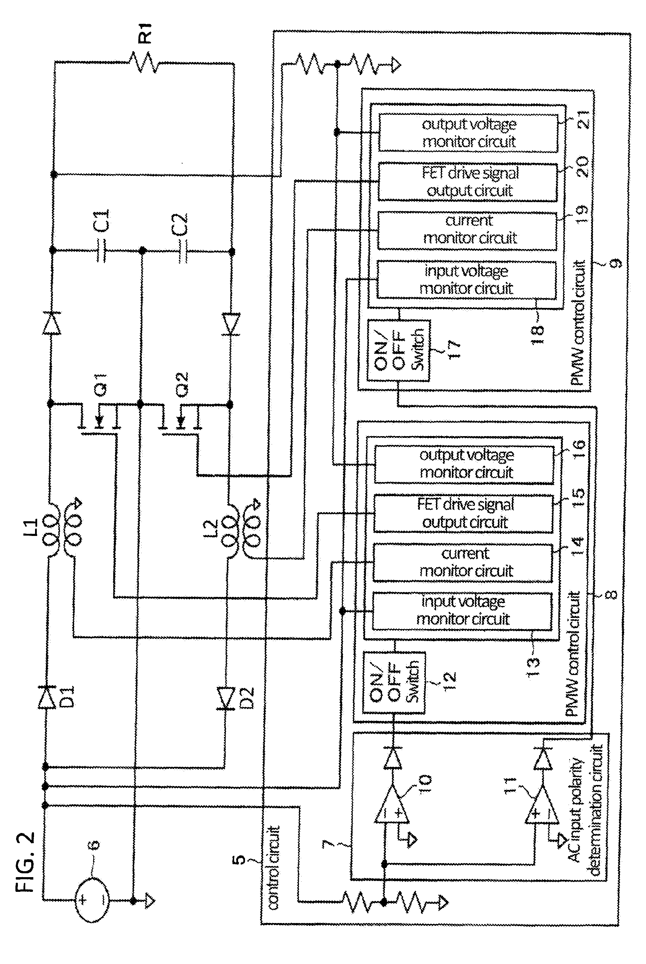

The control circuit 5 will be described in detail with reference to FIG. 2, which is a diagram illustrating the control circuit 5. The control circuit 5 in the example illustrated in FIG. 2 includes an AC input polarity determination circuit 7, and pulse width modulation (PWM) control circuits 8 and 9. The AC input polarity determination circuit 7 includes comparators 10 and 11.

The PWM control circuit 8 includes an ON/OFF switch 12, an input voltage monitor circuit 13, a current monitor circuit 14, a FET drive signal output circuit 15, and an output voltage monitor circuit 16. The PWM control circuit 9 includes an ON/OFF switch 17, an input voltage monitor circuit 18, a current monitor circuit 19, a FET drive signal output circuit 20, and an output voltage monitor circuit 21.

Operations of the circuits of the control circuit 5 will be described below. The AC input polarity determination circuit 7 detects the polarity of an AC voltage applied from the external power source 6. When the AC input polarity determination circuit 7 detects a positive AC voltage, the AC input polarity determination circuit 7 applies a predetermined voltage to the PWM control circuit 8; when the AC input polarity determination circuit 7 detects a negative AC voltage, the AC input polarity determination circuit 7 applies a predetermined voltage to the PWM control circuit 9.

The PWM control circuit 8 measures the value of input voltage applied from the external power source 6 to the first power factor correction circuit 2. The PWM control circuit 8 also measures the value of current flowing in the inductor L1. The PWM control circuit 8 measures the value of output voltage between the capacitor C1 and the external resistance R1.

When a voltage is applied from the AC input polarity determination circuit 7 to the PWM control circuit 8, the PWM control circuit 8 intermittently applies the gate voltage Vgs1 to the FET Q1 according to the measured input voltage value, current value and output voltage value.

The PWM control circuit 9 measures the value of input voltage applied from the external power source 6 to the second power factor correction circuit 3. The PWM control circuit 9 measures the value of current flowing in the inductor L2. The PWM control circuit 9 also measures the value of output voltage between the capacitor C1 and the external resistance R1.

When a voltage is applied from the AC input polarity determination circuit 7 to the PWM control circuit 9, the PWM control circuit 9 intermittently applies the gate voltage Vgs2 to the FET Q1 according to the measured input voltage value, current value and output voltage value. That is, when a negative voltage is applied from the external power source 6 to the second power factor correction circuit 3, the PWM control circuit 9 intermittently turns on the FET Q2 to cause the second power factor correction circuit 3 to improve the power factor of electric power.

The components of the AC input polarity determination circuit 7 and the components of the PWM control circuits 8 and 9 will be described below. When a positive AC voltage is applied from the external power source 6, the comparator 10 applies a predetermined voltage to the ON/OFF switch 12 of the PWM control circuit 8. On the other hand, when a negative AC voltage is applied from the external power source 6, the comparator 11 transmits a predetermined voltage to the ON/OFF switch 17 of the PWM control circuit 9.

When the predetermined voltage is applied to the ON/OFF switch 12 of the PWM control circuit 8, the ON/OFF switch 12 causes the circuits 13 through 16 to operate. The input voltage monitor circuit 13 measures the value of an input voltage applied to the first power factor correction circuit 2. The current monitor circuit 14 measures the value of current flowing in the inductor L1. The output voltage monitor circuit 16 measures the value of an external voltage between the capacitor C1 and the external resistance R1. The FET drive signal output circuit 15 intermittently applies the gate voltage Vgs1 to the FET Q1 according to the measured input voltage value, current value and external voltage value.

On the other hand, when the predetermined voltage is applied to the ON/OFF switch 17 of the PWM control circuit 9, the ON/OFF switch 17 causes the circuits 18 through 21 to operate. The input voltage monitor circuit 18 measures the value of input voltage applied to the second power factor correction circuit 3. The current monitor circuit 19 measures the value of current flowing in the inductor L2. The output voltage monitor circuit 21 measures the value of an external voltage between the capacitor C1 and the external resistance R1. The FET drive signal output circuit 20 intermittently applies the gate voltage Vgs2 to the FET Q2 according to the measured input voltage value, current value and external voltage value.

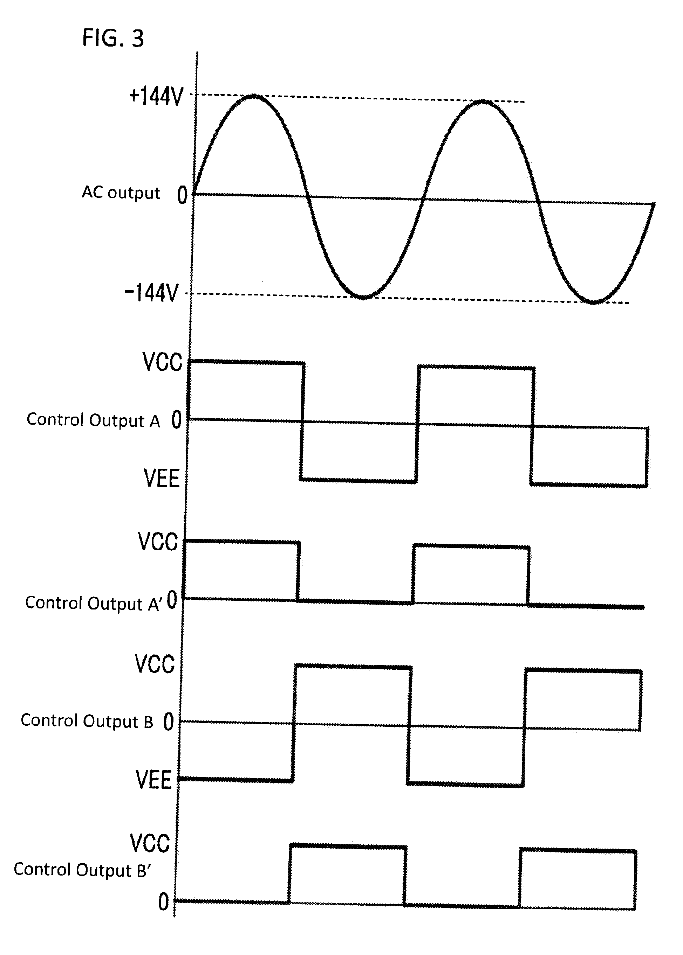

Referring to FIG. 3, the timings at which the control circuit 5 controls the FETs Q and Q2 will be described below. FIG 3 is a diagram illustrating exemplary timings at which the control circuit controls the FETs. AC INPUT in FIG. 3 represents the level of AC voltage applied from the external power source 6, ranging from -144 V to +144 V.

CONTROL OUTPUT A in FIG. 3 represents the level of voltage output from the comparator 10. CONTROL OUTPUT A' represents the level of voltage applied from the comparator 10 to the ON/OFF switch 12 of the PWM control circuit 8 through a diode. CONTROL OUTPUT B represents the level of voltage output from the comparator 11. CONTROL OUTPUT B' represents the level of voltage applied from the comparator 11 to the ON/OFF switch 17 of the PWM control circuit 9 through a diode.

For example, when AC INPUT in the example in FIG. 3 is positive, CONTROL OUTPUT A is positive and CONTROL OUTPUT A' is at a predetermined voltage value VCC. Therefore the PWM control circuit 8 turns on and the FET Q1 intermittently turns on. On the other hand, the PWM control circuit 9 does not turn on because CONTROL OUTPUT B is negative and CONTROL OUTPUT B' is not output when AC INPUT is positive.

When AC INPUT is negative, CONTROL OUTPUT B is positive and CONTROL OUTPUT B' is at a predetermined voltage value VCC. Therefore, the PWM control circuit 9 turns on and the FET Q2 intermittently turns on. The PWM control circuit 8, on the other hand, does not turn on because CONTROL OUTPUT A is negative and CONTROL OUTPUT A' is not output when AC INPUT is negative.

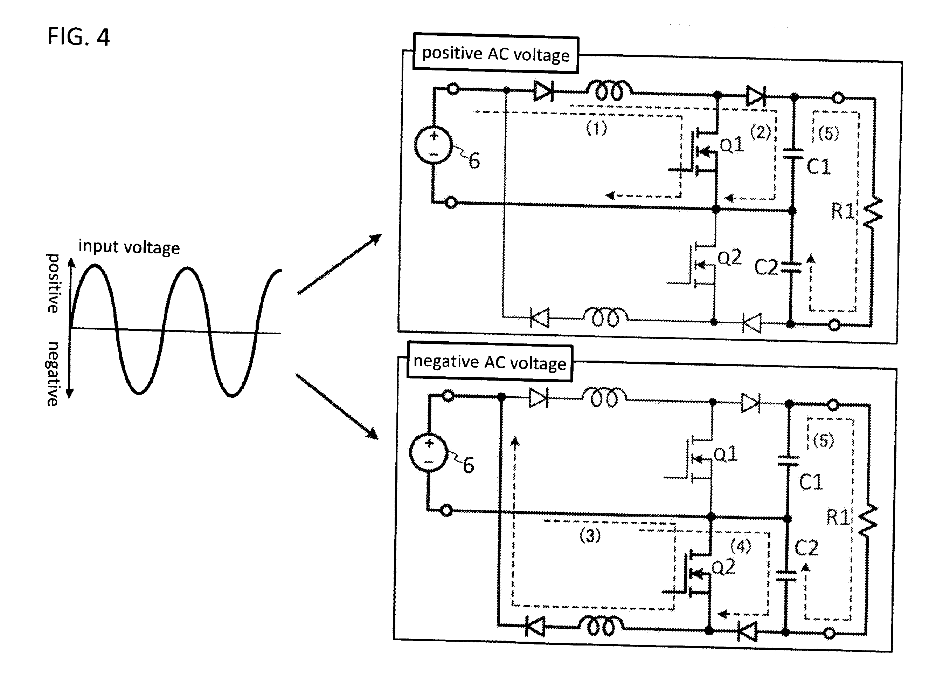

Referring to FIG 4, an exemplary process performed by the voltage-dividing bridgeless PFC circuit 1 to improve the power factor will be described below. FIG. 4 is a diagram illustrating the exemplary process performed by the voltage-dividing bridgeless PFC circuit for improving the power factor. When a positive AC voltage is applied from the external power source 6 to the voltage-dividing bridgeless PFC circuit 1 in the example illustrated in FIG. 4, current 11 flows through the first power factor correction circuit 2.

When the current 11 flows through the first power factor correction circuit 2, the first power factor correction circuit 2 intermittently switches between paths (1) and (2) illustrated in FIG. 4 to allow the current 11 flowing through the first power factor correction circuit 2 to be in phase with the applied voltage. That is, the first power factor correction circuit 2 improves the power factor of electric power when a positive AC voltage is applied from the external power source 6. The first power factor correction circuit 2 then stores the electric power with the improved power factor in the capacitor C 1. The capacitor C 1 then supplies the stored electric power to path (5).

On the other hand, when a negative AC voltage is applied from the external power source 6 to the voltage-dividing bridgeless PFC circuit 1, current 12 flows through the second power factor correction circuit 3. When the current 12 flows through the second power factor correction circuit 3, the second power factor correction circuit 3 intermittently switches between paths (3) and (4) illustrated in FIG 4 to force the current 12 flowing through the second power factor correction circuit 3 to be in phase with the applied voltage. That is, when a negative AC voltage is applied from the external power source 6, the second power factor correction circuit 3 improves the power factor of electric power. The second power factor correction circuit 3 then stores the electric power with the improved power factor in the capacitor C2. The capacitor C2 then supplies the stored electric power to path (5).

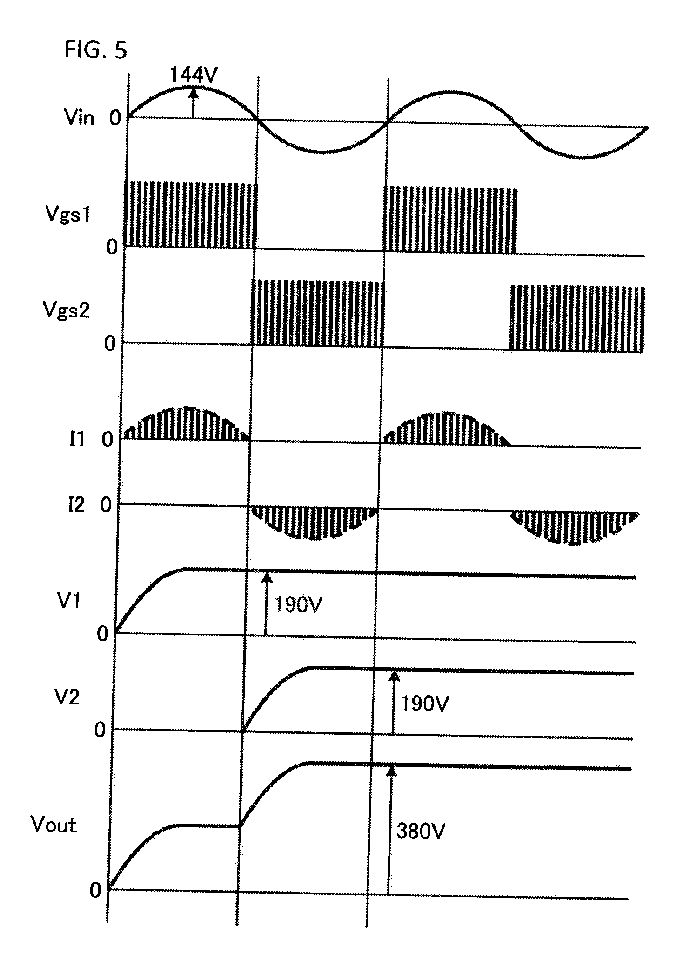

Referring to FIG 5, voltages output from the voltage-dividing bridgeless PFC circuit 1 will be described below. FIG 5 is a diagram illustrating voltage and current values in the voltage-dividing bridgeless PFC circuit. In FIG 5, V represents a voltage applied from the capacitor C1 to the external resistance R1 and V2 represents a voltage applied from the capacitor C2 to the external resistance R1. In the example illustrated in FIG. 5, each of the capacitors C1 and C2 applies a voltage of 190 V to the external resistance R1.

The capacitors C1 and C2 in the voltage-dividing bridgeless PFC circuit 1 are provided in series with the external resistance R1. Therefore, the voltage applied by the voltage-dividing bridgeless PFC circuit I to the external resistance R1 is 380 V That is, the voltage-dividing bridgeless PFC circuit 1 reduces the boosted voltage in the first and second power factor correction circuits 2 and 3 to half compared with a conventional PFC circuit and yet may maintain the output voltage equivalent to that of the conventional PFC circuit.

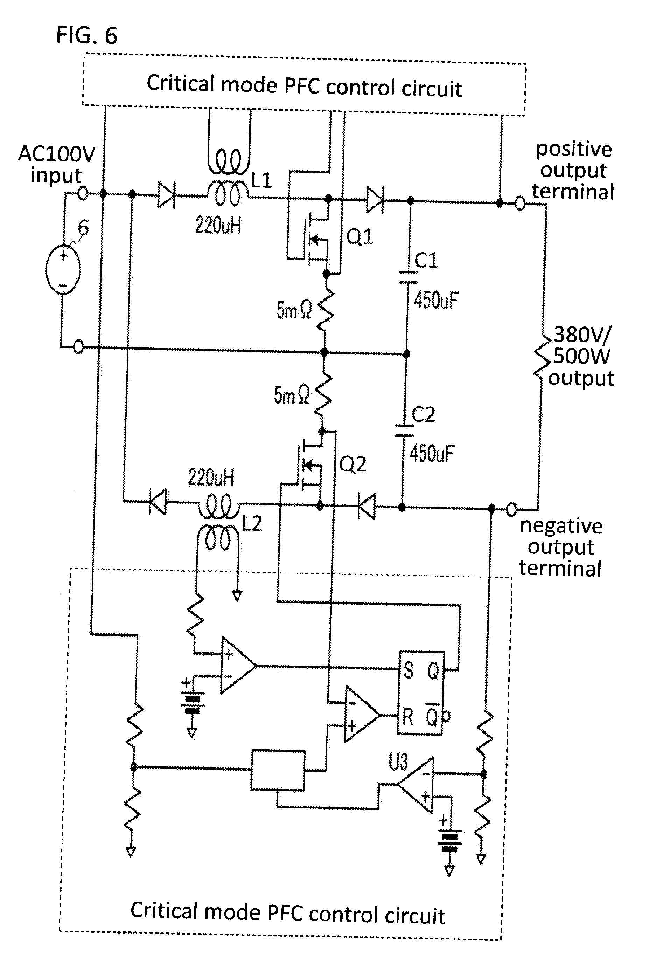

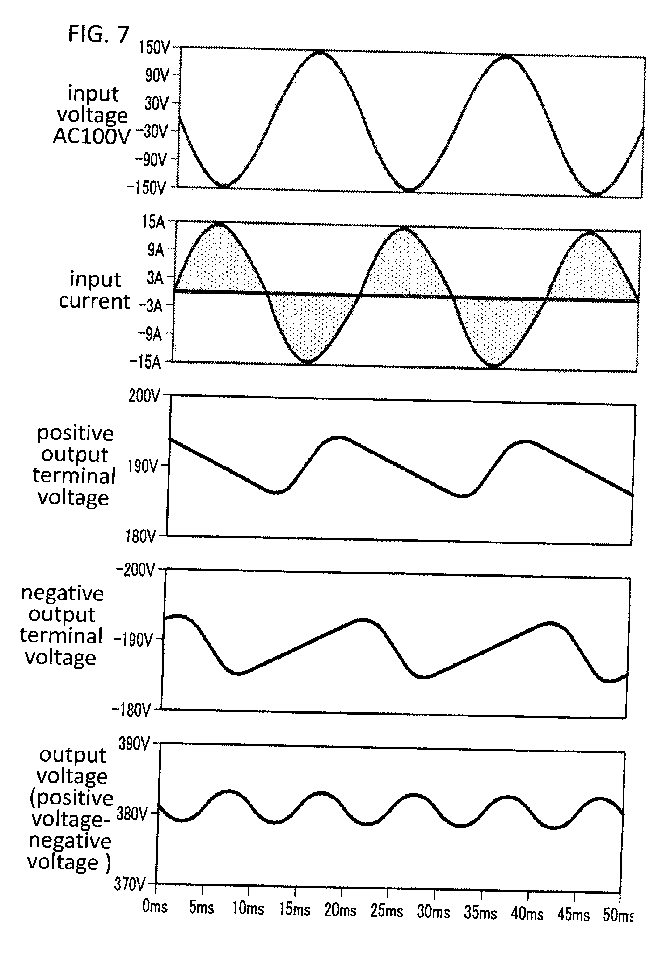

Referring to FIGS. 6 and 7, a specific example of the voltage-dividing bridgeless PFC circuit 1 will be described below. FIG 6 is a diagram illustrating an example of the voltage-dividing bridgeless PFC circuit 1. FIG 7 is a diagram illustrating an effect of the voltage-dividing bridgeless PFC circuit. INPUT VOLTAGE in FIG. 7 represents a plot of an AC voltage applied from the external power source 6. INPUT CURRENT represents a plot of a current input in the voltage-dividing bridgeless PFC circuit. POSITIVE OUTPUT TERMINAL VOLTAGE represents a plot of a voltage applied to the positive output terminal depicted in FIG. 6. NEGATIVE OUTPUT TERMINAL VOLTAGE is a plot of a voltage applied to the negative output terminal depicted in FIG 6. OUTPUT VOLTAGE is a plot of the difference between positive and negative outputs.

In the example illustrated in FIG. 6, the inductance of each of inductors L1 and L2 is 220 µH, the capacitance of each of capacitors C1 and C2 is 450 µF, and a resistance of 5 mΩ is connected to FETs Q1 and Q2. Critical mode PFC control circuits in FIG. 6 are circuits having functions similar to those of the PWM control circuits 8 and 9.

When an AC voltage of 100 V was applied from the external power source 6 to the voltage-dividing bridgeless PFC circuit 1 illustrated in FIG. 6, the outputs illustrated in FIG. 7 resulted. It may be seen from the example in FIG. 7 that the input voltage and the input current have the same waveforms and an output voltage of 380 V may be obtained. This shows that the voltage-dividing bridgeless PFC circuit 1 may reduce a voltage applied to the components of each of the power factor correction circuits 2 and 3 to half a voltage applied in a conventional PFC circuit and yet may output a voltage equivalent to that of the conventional PFC circuit.

### Effects of the First Embodiment

As has been described above, the voltage-dividing bridgeless PFC circuit 1 includes the circuit including the first power factor correction circuit 2 that improves the power factor when a positive AC voltage is input from the external power source 6 and the second power factor correction circuit 3 that is connected with the first power factor correction circuit 3 in parallel and that improves the power factor when a negative AC voltage is applied from the external power source 6. With the configuration, the voltage-dividing bridgeless PFC circuit 1 may improve the power factor of supplied AC power without using a bridge diode. Consequently, the voltage-dividing bridgeless PFC circuit 1 may reduce power loss.

Furthermore, current flows through the first power factor correction circuit 2 only when a positive AC voltage is applied, whereas current flows through the second power factor correction circuit 3 only when a negative AC voltage is applied. That is, only half of the AC voltage applied from the external power source 6 performs work in each of the power factor correction circuits 2 and 3. Consequently, the voltage-dividing bridgeless PFC circuit 1 may reduce a boosted voltage in each of the power factor correction circuits 2 and 3 to half compared with a conventional PFC circuit and therefore may use low-voltage components. Since the voltage-dividing bridgeless PFC circuit 1 may use low-voltage components, which are small, the footprint of the voltage-dividing bridgeless PFC circuit 1, and therefore the footprint of the PSU, may be reduced.

Furthermore, since the voltage-dividing bridgeless PFC circuit 1 includes the output circuit 4 that includes the capacitors C 1 and C2 provided in series, voltages output from the power factor correction circuits 2 and 3 may be added together. That is, the voltage-dividing bridgeless PFC circuit 1 reduces a boosted voltage in each of the power factor correction circuits 2 and 3 to half compared with a conventional PFC circuit and yet may output a voltage equivalent to that of the conventional PFC circuit.

Furthermore, the voltage-dividing bridgeless PFC circuit 1 turns off the PWM control circuit 9 when the PWM control circuit 8 operates, and turns off the PWM control circuit 8 when the PWM control circuit 9 operates. Thus, the voltage-dividing bridgeless PFC circuit 1 may reduce power consumed by the control circuit 5.

### Second Embodiment

While an embodiment of the present invention has been described, the present invention may be carried out in various modes besides the embodiment described above. Another example which falls in the scope of the present invention will be described below as a second embodiment.

### (1) Boost inductor sharing

In the voltage-dividing bridgeless PFC circuit 1 described above has independent inductors L1 and L2 provided in the first and second power factor correction circuits 2 and 3, respectively. However, the present invention is not limited to the embodiment. For example, a voltage-dividing bridgeless PFC circuit 1 a according to the present embodiment may have a circuit in which a first power factor correction circuit 2a and a second power factor correction circuit 3a according to the second embodiment share one single inductor.

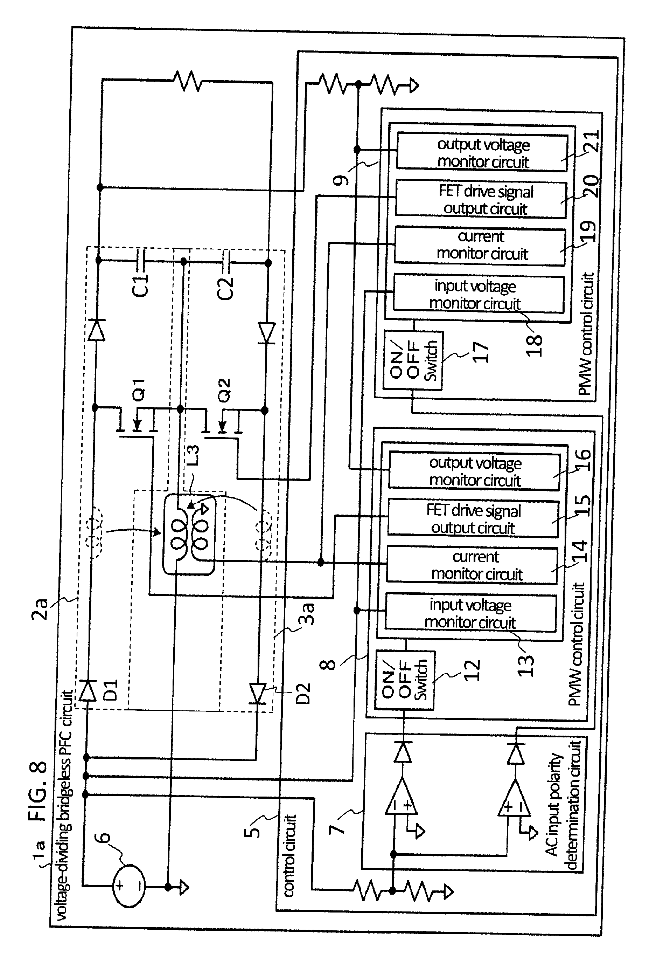

FIG. 8 is a diagram illustrating reduction of the number of boost inductors and current transformers. In the example illustrated in FIG. 8, a first power factor correction circuit 2a and a second power factor correction circuit 3a of the second embodiment share an inductor L3 for boosting an applied positive AC voltage. The first power factor correction circuit 2a improves the power factor of electric power only when a positive AC voltage is applied, whereas the second power factor correction circuit 3a improves the power factor of electric power only when a negative AC voltage is applied. That is, the first and second power factor correction circuits 2a and 3a use the inductor L3 at different timings.

Thus the first and second power correction circuits 2a and 3a may share the inductor L3. Consequently, the number of inductors used in the voltage-dividing bridgeless PFC circuit 1 a is reduced and therefore the size and cost of the circuit may be reduced. In addition, the reduction in equivalent series resistance (ESR) in the voltage-dividing bridgeless PFC circuit 1 a may improve the efficiency of the circuit.

### (2) PWM control circuit sharing

The voltage-dividing bridgeless PFC circuit 1 described above includes the PWM control circuit 8 that controls the first power factor correction circuit 2 and the PWM control circuit 9 that controls the second power factor correction circuit 3. However, the present invention is not limited to the embodiment. For example, a voltage-dividing bridgeless PFC circuit 1b according to the second embodiment may include a PWM control circuit 23 that controls the first and second power factor correction circuits 2a and 3a at the same time.

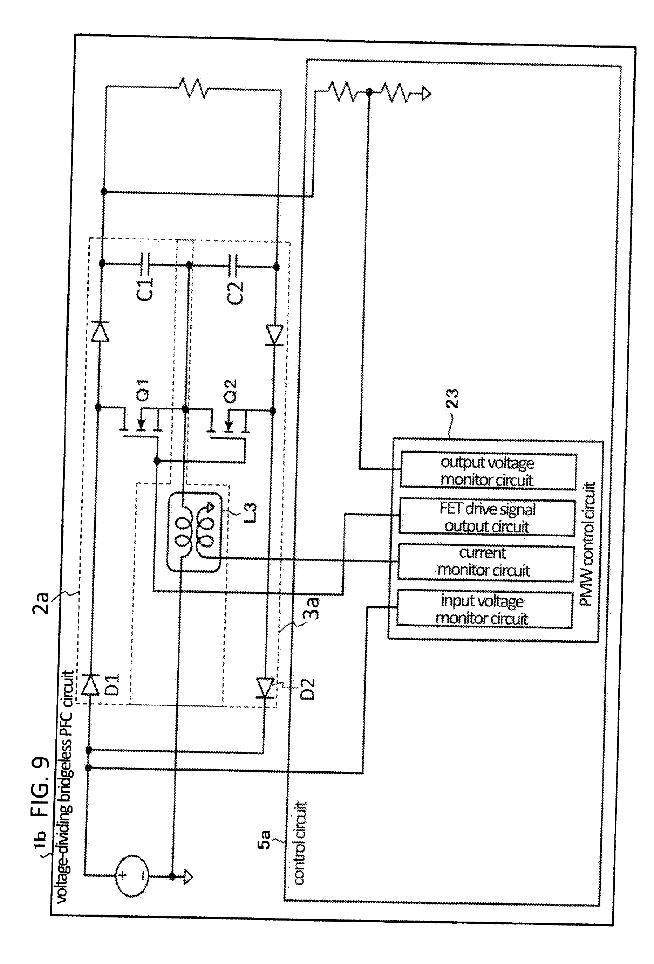

FIG 9 is a diagram illustrating a circuit in which a PWM control circuit is shared. A control circuit 5a illustrated in FIG. 9 includes a PWM control circuit 23. The PWM control circuit 23 has a function similar to that of the PWM control circuit 8 of the first embodiment. The PWM control circuit 23 transmits the same gate voltage to FETs Q1 and Q2 at the same time.

Current follows through the first and second power factor correction circuits 2a and 3a at different timings. Accordingly, the voltage-dividing bridgeless PFC circuit 1b may appropriately improve the power factor of electric power even though the FET Q1 of the first power factor correction circuit 2a and the FET Q2 of the second power factor correction circuit 3a are controlled at the same time. Since the number of PWM control circuits may be reduced, the size and cost of the voltage-dividing bridgeless PFC circuit 1b may be reduced.

### (3) Diode replacement

The voltage-dividing bridgeless PFC circuit 1 described above includes the diode D1 that allows current to flow though the first power factor correction circuit 2 in a constant direction. The voltage-dividing bridgeless PFC circuit 1 also includes the diode D2 that allows current to flow through the second power factor correction circuit 3 in a constant direction. However, the present invention is not limited to the embodiment. For example, a voltage-dividing bridgeless PFC circuit 1c according to the second embodiment may include FETs Q3 and Q4 in place of the diodes D1 and D2, respectively.

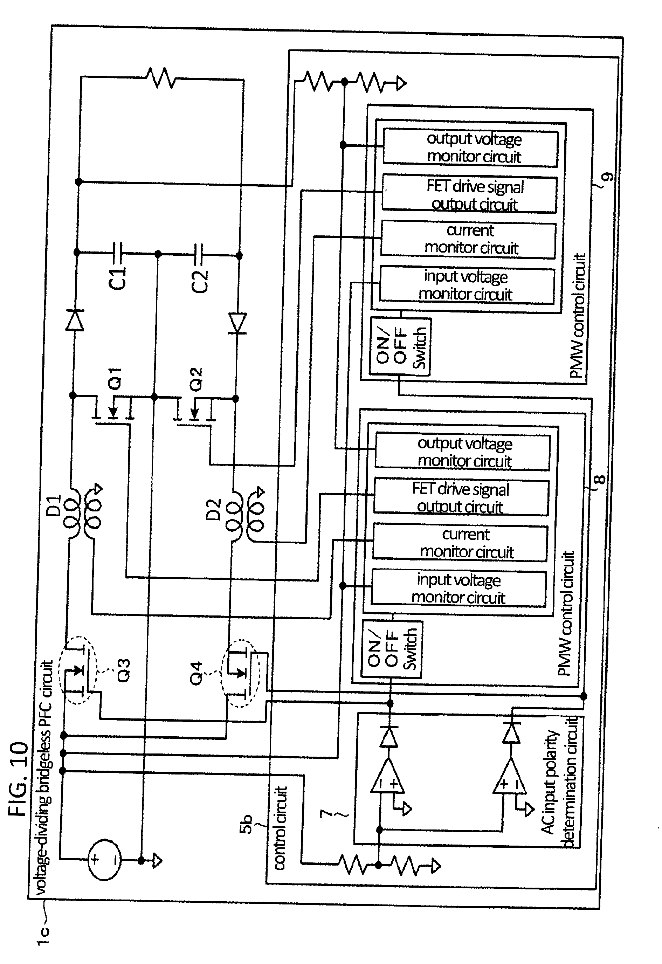

FIG. 10 illustrates an exemplary voltage-dividing bridgeless PFC circuit that includes a further reduced number of diodes. In the example in FIG. 10, the voltage-dividing bridgeless PFC circuit 1c has circuits that include FETs Q3 and Q4 in place of the diodes D1 and D2, respectively, of the first embodiment.

The gate of the FET Q3 is connected to a circuit point at which an AC input polarity determination circuit 7 applies a voltage to a PWM control circuit 8. The gate of the FET Q4 is connected to a circuit point at which the AC input polarity determination circuit 7 applies a voltage to a PWM control circuit 9. Accordingly, the AC input polarity determination circuit 7 of the second embodiment acts as a voltage application control circuit that applies a gate voltage to the FET Q3 when the AC input polarity determination circuit 7 has detect a positive AC current and applies a gate voltage to the FET Q4 when it has detected a negative AC current.

Specifically, the first power factor correction circuit 2a includes the FET Q3 that allows current to flow through the first power factor correction circuit 2a only when a gate voltage is applied by the control circuit 5b, so that the current flowing through the FET Q3 is forced to be in phase with the positive AC voltage to improve the power factor of electric power. The second power factor correction circuit 3a includes the FET Q4 that allows current to flow through the second power factor correction circuit 3a only when a gate voltage is applied by the control circuit 5b, so that the current flowing through the FET Q4 is forced to be in phase with the negative AC voltage to improve the power factor of electric power.

Since the voltage-dividing bridgeless PFC circuit 1c uses FETs to replace diodes, power loss may be further reduced. Furthermore, a voltage that is applied from the AC input polarity determination circuit 7 for causing the PWM control circuits 8 and 9 to operate is used to cause the FETs 3 and 4 to operate, the voltage-dividing bridgeless PFC circuit 1c does not need a control circuit for causing the FETs Q3 and Q4 to operate. Consequently, the voltage-dividing bridgeless PFC circuit 1c may reduce power loss without increasing the size of the circuit.

## Claims

1. A voltage-dividing power factor correction circuit comprising:
a first power factor correction circuit arranged to, when a positive AC voltage is applied from an external source, forces current produced by the applied positive AC voltage to be in phase with the applied positive AC voltage so that a power factor of electric power is improved;
a second power factor correction circuit arranged to, when a negative AC voltage is applied from an external source, forces current produced by the applied negative AC voltage to be in phase with the applied negative AC voltage so that a power factor of electric power is improved; and
an output circuit including a first capacitor for storing first electric power with a power factor improved by the first power factor correction circuit and a second capacitor for storing second electric power with a power factor improved by the second power factor correction circuit, the first capacitor and the second capacitor being provided in series, the output circuit arranged to output the first electric power stored in the first capacitor and the second electric power stored in the second capacitor.

2. The voltage-dividing power factor correction circuit according to claim 1, wherein the first power factor correction circuit shares an inductor with the second power factor correction circuit, the inductor being used to boost the positive AC voltage or the negative AC voltage.

3. The voltage-dividing power factor correction circuit according to claim 1 or 2, further comprising:
a controller,
wherein the first power factor correction circuit includes a first Field Effect Transistor, the first power factor correction circuit is arranged to force current produced by the applied positive AC voltage to be in phase with the applied positive AC voltage by using the first Field Effect Transistor so that the power factor of electric power is improved, a source of the first Field Effect Transistor is connected to one electrode of the first capacitor, and a drain of the first Effect Transistor is connected to another electrode of the first capacitor through a diode,
wherein the second power factor correction circuit includes a second Field Effect Transistor, the second power factor correction circuit is arranged to force current produced by the applied positive AC voltage to be in phase with the applied positive AC voltage by using the second Field Effect Transistor so that the power factor of electric power is improved, a source of the second Field Effect Transistor is connected to one electrode of the second capacitor, and a drain of the second Effect Transistor is connected to another electrode of the second capacitor through a diode,
wherein the controller is arranged to synchronously output a permission signal for allowing the first Field Effect Transistor and the second Field Effect Transistor to turn on.

4. The voltage-dividing power factor correction circuit according to claim 1, 2, or 3, further comprising:
a detector for detecting a sign of AC voltage;
a controller that is arranged to output a permission signal for allowing the first Field Effect Transistor to turn on, if the sign of AC voltage is positive, and output the permission signal for allowing the second Field Effect Transistor to turn on, if the sign of AC voltage is negative;
wherein the first power factor correction circuit includes a first Field Effect Transistor and the first power factor correction circuit is arranged to force current produced by the applied positive AC voltage to be in phase with the applied positive AC voltage by using the first Field Effect Transistor so that the power factor of electric power is improved,
wherein the second power factor correction circuit includes a second Field Effect Transistor and the second power factor correction circuit is arranged to force current produced by the applied negative AC voltage to be in phase with the applied negative AC voltage by using the second Field Effect Transistor so that the power factor of electric power is improved.

5. A voltage-dividing power factor correction circuit comprising:
a first power factor correction circuit arranged to, when a positive AC voltage is applied from an external source, force current produced by the applied positive AC voltage to be in phase with the applied positive AC voltage so that a power factor of electric power is improved;
a second power factor correction circuit arranged to, when a negative AC voltage is applied from an external source, force current produced by the applied negative AC voltage to be in phase with the applied negative AC voltage so that a power factor of electric power is improved; and
an output circuit for outputting first electric power improved in a power factor of electric power by the first power factor correction circuit and second electric power improved in a power factor of electric power by the second power factor correction circuit.

6. A method for a voltage-dividing power factor correction circuit including a first power factor correction circuit, a second power factor correction circuit, and an output circuit, the method comprising:
forcing current produced by the applied positive AC voltage to be in phase with the applied positive AC voltage so that a power factor of electric power is improved, when a positive AC voltage is applied from an external source;
forcing current produced by the applied negative AC voltage to be in phase with the applied negative AC voltage so that a power factor of electric power is improved, when a negative AC voltage is applied from an external source; and
outputting first electric power improved in a power factor of electric power by the first power factor correction circuit and second electric power improved in a power factor of electric power by the second power factor correction circuit.
